# EUROPEAN PATENT APPLICATION

(11) **EP 1 441 166 A2**
(43) Date of publication of application: **28.07.2004**
(21) Application number: 03256224.1
(22) Date of filing: 02.10.2003
(51) Int. Cl.: F16L 27/06, F16L 27/04

(54) **Flexible coupling**

(30) Priority: 17.10.2002 EP 02257209
(71) Applicant: Meggitt (U.K.) Limited, Wimborne, Dorset, BH21 4EL (GB)
(72) Inventor: Gilmore, Jason, Hemel Hempstead Herts HP2 7SL (GB)
(74) Representative: Haley, Stephen

(57) **Abstract**

A flexible coupling for a ducting system. The coupling comprises a first member (1) including a first engaging member, the first member (1) defining a receiving portion and a second member (3) including a second engaging member (4), the second member (3), in use, engaging with the receiving portion such that the first (1) and second (3) members can be held together to define a retaining cavity. The coupling has a seal (6) arranged to seal, in use, the gap between the first (1) and a second member (3). A third member (7) is retained, in use, in the retaining cavity such that it is rotatable in any of the three rotational degrees of freedom within the cavity. There is a carbon first load bearing member (8) positioned between the second (3) and third (7) members such that, in use, the first load bearing member (8) provides a load bearing surface in engagement with the surface of the second member (3).

## Description

The present invention relates to a flexible coupling for ducting systems for application in areas such as aerospace.

Standard ducting systems used in applications such as aerospace comprise tubing with a flange at either end so that the ducting can be assembled and dismantled when required. The ducting system must have inherent flexibility to compensate for factors such as thermal expansion of the tube and the displacement of the structure that the ducting is mounted to. To achieve this, ducting systems have motion compensating joints.

Standard motion compensating joints, such as a gimbal, usually comprise a metallic bellow unit with a structure around the bellow. These have associated pressure end load problems or are confined to low temperatures as they do not cope well with expansion. They also have a large number of parts and are heavy and expensive to manufacture. Furthermore, even joints which seek to work at extreme temperatures and in harsh environments, often still require a considerable number of components and are usually extremely cumbersome to install and take apart, making them unsuitable for use in environments where there is minimal access and/or space is at a premium.

The present invention is aimed at compensating for build tolerances and the loads and movement mentioned above , whilst providing a coupling that is simple to remove, and overcoming some of the problems associated with standard ducting systems.

According to the present invention there is provided a flexible coupling for a ducting system, the coupling comprising:
a first member including a first engaging member, the first member defining a receiving portion;
a second member including a second engaging member, the second member, in use, engaging with the receiving portion such that the first and second members can be retained together by the first and second engaging surfaces to define a retaining cavity of substantially spherical curvature;
a seal arranged, in use, to seal the gap between the first and second members;
a third member retained, in use, in the retaining cavity such that it is rotatable in any of the three rotational degrees of freedom within the cavity around a point offset in the direction opposite to the insertion direction of the third member from a plane defined by the engaging surfaces of the first and second members; and
a first load bearing member positioned between the second and third members such that, in use, the load bearing member provides a load bearing surface in engagement with the surface of the second member.

The first load bearing member may be formed from carbon.

The engaging surfaces may be formed as flanges.

The flexible coupling may further comprise a second load bearing member positioned between the first and third members such that, in use, the load bearing member provides a load bearing surface in engagement with the surface of the first member.

The sealing portion of the flexible coupling may be made from carbon.

If the first and second surfaces are flanges, the flexible coupling may further comprise a clamp which, in use, clamps around the first and second members.

The first and third members of the flexible coupling may each be integrally connected to a piece of tubing.

Incorporating the gimbal and flange parts of a coupling together results in a significant reduction in the weight of the coupling, which is an important advantage in areas such as aerospace. Reduced weight also means that the coupling will experience reduced stress due to inertia loads.

The number of parts and welds needed is also significantly reduced, compared to a standard gimbal and flanges, so reducing the manufacturing cost.

Also the pressure drop for the present invention can be less than that for a typical bellows unit.

The flexible coupling of the present invention can be rotated in any of the three rotational degrees of freedom and can be opened just like a flange break.

Standard motion compensating joints only have two degrees of freedom. The additional possible motion of the present invention is in the torsion direction of the duct. This can lead to fewer motion compensating units being needed in a system.

It is advantageous to have a carbon load bearing portion rather than a metal load bearing portion because carbon beds in with prolonged use whilst metal wears away.

Examples of the present invention will now be described with reference to the accompanying drawings, in which:
Figure 1 is a side cross-sectional view of a first example flexible coupling, according to an example of the invention;
Figure 2 is a side cross-sectional view of the first example flexible coupling according the invention when displaced;
Figure 3 is a side cross-sectional view of the example of the first two figures during disassembly;
Figure 4 is a side view of an example flexible coupling of the invention, further comprising a clamp; and
Figure 5 shows example seal rings that may be employed in the present invention.

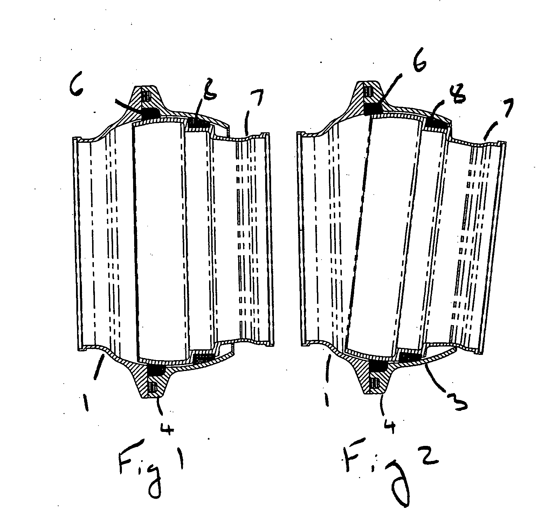

Referring to figure 1, an example coupling according to the invention has a first member 1 which includes a first flange 2 and a second member 3 which includes a second flange 4. In use, the second member 3 engages with the first member 1 to define a retaining cavity 5. A seal 6 is provided between the first 1 and second 3 members. The seal 6, dependent upon its shape and material, may also provide a load bearing function.

A third member 7 fits in the retaining cavity 5, with a first load bearing member 8, formed, in this example, from carbon, positioned between the third member 7 and the second member 3. This load bearing member 8, in use, provides a load bearing surface in contact with the inner surface of the second member 3 and provides the dual function of sealing and the enabling of relative movement of the second 3 and third 7 members with the application of relatively low force.

With this configuration the third member 7 can be rotated within the retaining cavity 5, with uninhibited torsional rotation, improving ease of installation and ensuring that the coupling can move in use to compensate for movement in, for example, the aircraft that it is installed in.

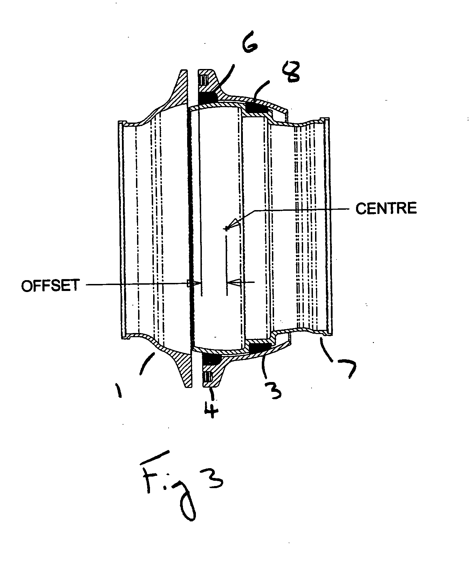

Figure 2 shows the coupling of figure one when at full axial displacement. From figure 2 it can be seen that the load bearing member 8 is still contained within the envelope of the second member 3, which means that it is not exposed to the surrounding environment, which may be harsh and which may contain contaminating material that would otherwise affect the viability of the load bearing component 8. From this it can also be seen that the point about which the third member 7 rotates its offset in a direction opposite to the insertion direction of the third member 7 with respect to a plane defined by the meeting point of the first 2 and second 4 flanges. This feature of the coupling has benefits that can be seen with reference to figure 3. In figure 3, which shows the coupling either just prior to assembly or just after this assembly. From this it can be seen that the employment of an offset means that the third member 7 can have the appropriate degrees of freedom of movement to provide the necessary flexibility, but that it does not encroach to a significant degree into the first member 1. This means that, during removal at least, the third member 7 need only be moved a very small distance in the direction opposite to that of insertion before the first and second members can be slid apart. This means that the coupling can be used even in very restricted spaces where access is difficult.

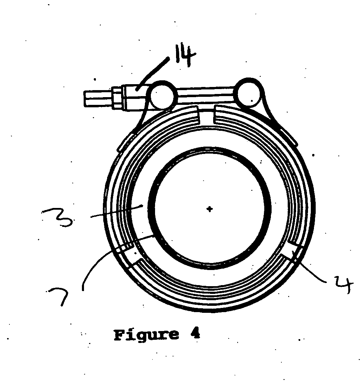

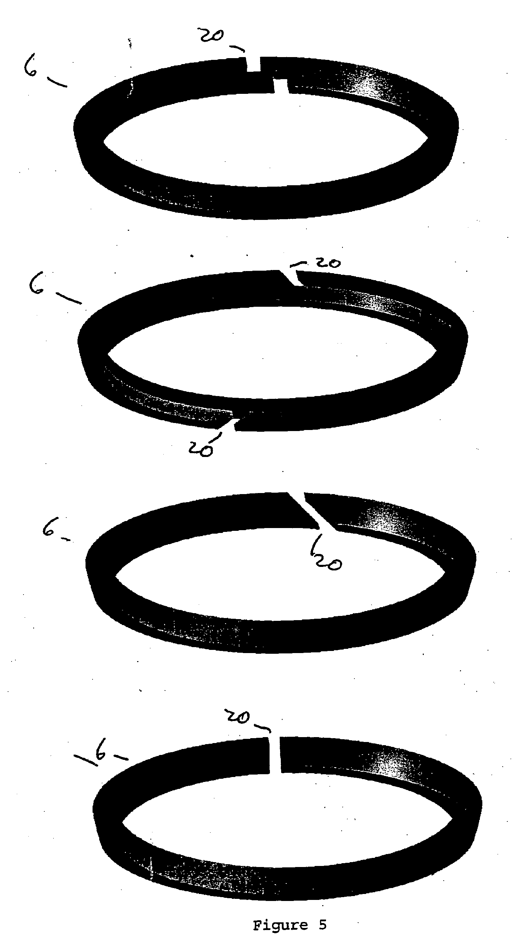

Figures 4 and 5 show a coupling of the type shown in figures 1 and 2 held together with a clamp 14 which clamps around the first 2 and second 4 flanges. The clamp 14 may be of a known standard type. It will, of course, be appreciated that altemative retaining arrangements, such as screw threads and bayonet fixings may be employed.

Figure 5 shows example configurations of the seal 6, from which it can be seen that the seal 6 has a break 20 in it to allow assembly. The break 20 is either an angled or stepped cut through the seal 6 to improve the sealing qualities of the seal 6 and to reduce the likelihood of fluid flow through the break 20. As an alternative, it would be possible to employ more than one seal 6, which each seal 6 having a break 20 which is in a different circumferential position in use in order to restrict fluid flow through the device.

## Claims

1. A flexible coupling for a ducting system, the coupling comprising:
a first member including a first engaging member, the first member defining a receiving portion;
a second member including a second engaging member, the second member, in use, engaging with the receiving portion such that the first and second members can be retained together by the first and second engaging surfaces to define a retaining cavity of substantially spherical curvature;
a seal arranged, in use, to seal the gap between the first and second members;
a third member retained, in use, in the retaining cavity such that it is rotatable in any of the three rotational degrees of freedom within the cavity around a point offset in the direction opposite to the insertion direction of the third member from a plane defined by the engaging surfaces of the first and second members; and
a first load bearing member positioned between the second and third members such that, in use, the load bearing member provides a load bearing surface in engagement with the surface of the second member.

2. The flexible coupling of claim 1, further comprising a second load bearing member positioned between the first and third members such that, in use, the load bearing member provides a load bearing surface in engagement with the surface of the first member.

3. The flexible coupling of claim 1 or claim 2, wherein the sealing portion is made from carbon.

4. The flexible coupling of any preceding claim, wherein the engaging members are flanges.

5. The flexible coupling of claim 4, further comprising a clamp which, in use, clamps around the first and second flanges of the first and second members.

6. The flexible coupling of any preceding claim, wherein the first and third members are each integrally connected to a piece of tubing.

7. The flexible coupling of any preceding claim, wherein the first load bearing member is formed from carbon.

8. The flexible coupling of any preceding claim, wherein the third member is shaped so that it always covers the load bearing surface.
